# EUROPÄISCHE PATENTSCHRIFT

(11) **EP 0 425 769 B1**
(45) Veröffentlichungstag und Bekanntmachung des Hinweises auf die Patenterteilung: **02.03.1994**
(21) Anmeldenummer: 90114213.3
(22) Anmeldetag: 25.07.1990
(51) Int. Cl.: F16D 3/76

(54) **Elastische Kupplung zur Drehmoment-Übertragung**
Elastic coupling for torque transmission
Accouplement élastique pour transmission de couple

(30) Priorität: 03.08.1989 DE 3925678
(43) Veröffentlichungstag der Anmeldung: 08.05.1991
(73) Patentinhaber: Hartz, geb. Funke, Christa, D-44649 Herne (DE)
(72) Erfinder: Hartz, Helmut, deceased (DE)
(74) Vertreter: Spalthoff, Adolf, Dipl.-Ing.

(56) Entgegenhaltungen:
- DE-A- 3 012 411
- DE-A- 3 334 881

## Beschreibung

Die Erfindung betrifft eine Drehmoment übertragende Kupplung, zwischen deren treibenden und getriebenen Teil sich mindestens ein elastisches Verbindungsglied befindet, dessen eine axiale Außenseite an einer mit dem treibenden Teil verbundenen Außenscheibe befestigt ist und dessen andere axiale Außenseite an einer Innenscheibe anliegt, welche mit einer Nabe verbunden ist, welche an den getriebenen Teil angeschlossen ist, wobei der treibende Teil und die Nabe des getriebenen Teils einander zugeordnete, parallele Ringflächen aufweisen, zwischen denen sich ein Gleitlager od.dgl. befindet.

Eine derartige ausgebildete Kupplung ist aus der DE-A-3012411 bekannt.

Derartige bekannte Kupplungen haben sich vielfach bewährt, jedoch zeigt es sich, daß diese den gestiegenen und immer noch weiter steigenden Anforderungen an eine Erhöhung der Drehzahlen nicht mehr gerecht werden. Bei den bekannten Kupplungen finden Gleitlager Verwendung, deren Flächen zylindrisch ausgeführt und parallel zur Abtriebsachse verlaufen. Das üblicherweise Verwendung findende Gleitlager-Material hat beim Einbau in die Kupplung eine rauhe Oberfläche. Wenn diese Kupplungen eingelaufen sind, sind die Oberflächen der Gleitlager geglättet, so daß infolge des aufgetretenen Verschleißes Lagerspiele auftreten, welche aber keine hohen Drehzahlen zulassen.

Von diesem Stand der Technik ausgehend liegt der Erfindung die Aufgabe zugrunde, eine gattungsgemäße Kupplung dahingehend zu verbessern, daß diese auch zur Übertragung von Drehmomenten mit vergleichsweise hohen Drehzahlen geeignet ist.

Erfindungsgemäß wird dies dadurch erreicht, daß die einander zugeordneten, parallelen Ringflächen des treibenden Teils und der Nabe des getriebenen Teils unter einem Winkel zur Längsachse der Abtriebswelle verlaufen und das elastische Verbindungsglied unter Vorspannung eingebaut ist, oder die Vorspannung durch in gleicher Weise wirkende Federn, vorzugsweise Tellerfedern, aufgebracht ist. Durch die axiale Vorspannung des elastischen Verbindungsgliedes wird an den Reibflächen eine Reibungsdämpfung erzielt. Dadurch ist es möglich, sehr weiche Gummimischungen für das Verbindungsglied zu verwenden, und zwar fast ohne eine dem Gummi eigene Dämpfungskapazität.

Durch diese Ausgestaltung wird erreicht, daß die Vorspannung des elastischen Verbindungsgliedes als axiale Feder wirksam wird, so daß auch bei einem Verschleiß der konischen Flächen des Gleitlagers eine selbsttätige Nachstellung des Zentrierlagers bewirkt wird und daher kein Lagerspiel auftreten kann. Die radiale und axiale Fixierung bleibt somit erhalten. Das konische Gleitlager nimmt außer der erforderlichen Reibung noch das Gewicht der angeschlossenen Gelenkwelle und deren Restunwuchten auf und ermöglicht außerdem noch eine selbsttätige Nachstellung.

In Anwendungsfällen, in denen das Verbindungsglied nicht mit axialer Vorspannung eingebaut ist, finden in gleicher Weise wie die Vorspannung wirkende Federn, vorzugsweise Tellerfedern, Verwendung.

Durch die von der Vorspannung bzw. der Feder ausgeübte Kraft wird eine selbsttätige Nachstellung der konischen Reibflächen des Gleitlagers bewirkt.

Vorzugsweise beträgt der Winkel der einander zugeordneten parallelen Ringflächen etwa 45 Grad.

Die andere axiale Außenseite des Ringes ist sich von außen nach innen hin konisch verjüngend ausgebildet, wobei die dieser zugeordnete Seite des Innenteils dieser in ihrer Formgebung angepaßt ist.

Die einander zugeordneten konischen Seiten des elastischen Verbindungsgliedes und der Innenscheibe übertragen die Kraft der Vorspannung des elastischen Verbindungsgliedes auf die Nabe und damit auf die konischen Ringflächen des Gleitlagers im Sinne eines selbsttätigen Nachstellens.

Bei der Realisierung vergleichsweise hoher Drehzahlen hat es sich bei den gattungsgemäßen Kupplungen als nachteilig erwiesen, daß die Verwendung findenden, elastischen Verbindungsglieder verhältnismäßig hohen Fliehkräften ausgesetzt sind. Diese Fliehkräfte bewirken, daß sich die radiale Außenseite, d.h. also die äußere Umfläche des elastischen Verbindungsgliedes, nach außen auswölbt und mit der Innenseite des treibenden Teils in Reibkontakt gerät. Die hierbei entstehende Wärme führt zwangsläufig zu einer Zerstörung des elastischen Verbindungsgliedes und damit der Kupplung. Der Hauptkontakt kann außer der Wärmeerzeugung infolge Reibung und daraus folgender Zerstörung der Kupplung auch zur Vulkanisation mit dem Außenteil führen, wodurch die ursprüngliche Elastizität verlorengeht.

Bei einer gattungsgemäßen Kupplung, insbesondere nach dem Hauptanspruch, wird zur Vermeidung dieses Nachteils vorgeschlagen, daß zwischen der radialen Außenseite des elastischen Verbindungsgliedes und der dieser zugewandten Innenseite des treibenden Teils der Kupplung ein Ringraum vorhanden ist, welcher mit einem hydraulischen Mittel gefüllt und nach außen hin abgedichtet ist. Als hydraulisches Mittel findet vorzugsweise ein technisches Fett Verwendung. Da das hydraulische Mittel inkompressibel ist, kann keine Auswölbung und damit keine Reibung auftreten, so daß ein Schadhaftwerden des elastischen Verbindungsgliedes mit Sicherheit ausgeschlossen ist.

Gemäß einem weiteren Vorschlage der Erfindung ist das vorhandene Gleitlager mit der konischen Ringfläche der Nabe fest verbunden, vorzugsweise durch Klebung, so daß bei den als Folge der hohen Drehzahlen auftretenden hohen Frequenzen eine zusätzliche Erwärmung des elastischen Verbindungsgliedes verhindert wird, da das Gleitlager eine isolierende Wirkung ausübt und die entstehende Wärme somit gezwungen ist, in den metallischen treibenden Teil abzustrahlen.

Ausführungsbeispiele der Erfindung sind an Hand der Zeichnung näher erläutert, und zwar zeigt:
- Figur 1: eine geschnittene Seitenansicht einer Hälfte einer Drehmoment übertragenden Kupplung und
- Figur 2: die gleiche Darstellung einer abgewandelten Ausführungsform.

Mit 1 ist der treibende Teil der Drehmoment übertragenden Kupplung bezeichnet, welcher in herkömmlicher Weise mit einem Flansch 2 für einen Schwungradanschluß ausgerüstet ist.

Der getriebene Teil der Kupplung ist mit 3 bezeichnet und in herkömmlicher Weise für einen Gelenkwellenanschluß ausgebildet.

Zwischen dem treibenden und dem getriebenen Teil 1, 3 befindet sich ein elastisches Verbindungsglied 4, welches von einem Ring oder Segmenten gebildet sein kann. Die eine axiale Außenseite 5 des elastischen Verbindungsgliedes 4 ist an einer mit dem treibenden Teil 1 verbundenen Außenscheibe 6 befestigt, z.B. durch Vulkanisieren, während die andere axiale Außenseite 7 an einem Innenteil 8 anliegt, welches mit einer Nabe 9 verbunden ist, welche an den getriebenen Teil 3 angeschlossen ist. Der treibende Teil 1 und die Nabe 9 des getriebenen Teils 3 weisen einander zugeordnete, parallele Ringflächen 10, 11 auf, zwischen denen sich ein Gleitlager 12 befindet.

Die einander zugeordneten, parallelen Ringflächen 10, 11 des treibenden Teils 1 und der Nabe 9 des getriebenen Teils 3 verlaufen unter einem Winkel von vorzugsweise etwa 45 Grad zur Längsachse der der Einfachheit halber nicht dargestellten Abtriebswelle.

Die andere axiale Außenseite 7 des elastischen Verbindungsgliedes 4 ist sich von außen nach innen hin konisch verjüngend ausgebildet, wobei die dieser zugeordnete Seite 13 des Innenteils 8 dieser in ihrer Formgebung angepaßt ist, also ebenfalls konisch verlaufend ausgeführt ist.

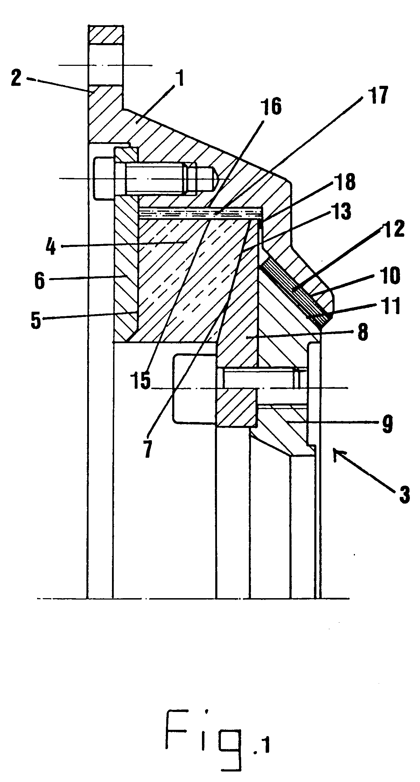

Das elastische Verbindungsglied 4 ist bei der Ausführung nach Figur 1 mit Vorspannung eingebaut.

Die durch die Vorspannung hervorgerufene Druckkraft bewirkt, daß bei einem in dem Gleitlager 12 auftretenden Verschleiß dieser selbsttätig ausgeglichen wird, und zwar einmal über die konischen Seiten 7, 13 und zum anderen über die konischen Ringflächen 10, 11, so daß ein Lagerspiel mit Sicherheit vermieden wird und damit die Kupplung für vergleichsweise hohe Drehzahlen einsetzbar ist.

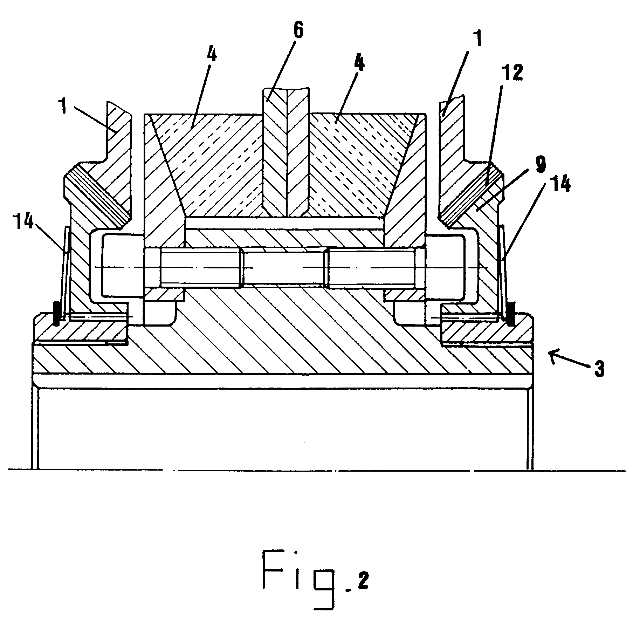

Wie aus Figur 2 ersichtlich, können zwei der Bauelemente nach Figur 1 auch miteinander kombiniert werden, wobei diese prinzipiell den gleichen Aufbau sowie die gleiche Ausgestaltung besitzen wie das Bauteil nach Figur 1.

Bei der Ausführung nach Figur 2 sind die elastischen Verbindungsglieder 4 jedoch nicht mit Vorspannung eingebaut, so daß zusätzliche Federn 14 in Form von Tellerfedern vorgesehen sind, die in gleicher Weise wirksam werden wie die Vorspannung des elastischen Verbindungsgliedes 4 nach Figur 1, also ein selbsttätiges Nachstellen der Gleitlager 12 bewirken.

Wie in Figur 1 dargestellt, ist zwischen der radialen Aussenseite 15 des elastischen Verbindungsgliedes 4, also der äußeren Umfläche desselben, und der dieser zugewandten Innenseite 16 ein Ringraum vorhanden, welcher mit einem hydraulischen Mittel 17, vorzugsweise einem technischen Fett, gefüllt ist. Dieser Ringraum ist nach außen hin dicht verschlossen, beispielsweise durch den O-Ring 18. Infolge der Füllung des Ringraumes mit dem hydraulischen Mittel 17 können die insbesondere bei hohen Drehzahlen auf das elastische Verbindungsglied 4 einwirkenden Fliehkräfte nicht zu einer Auswölbung desselben führen, da das elastische Verbindungsglied 4 infolge der inkompressiblen Füllung des Ringraumes an einem Ausweichen nach außen gehindert ist.

Um eine zusätzliche Erwärmung des elastischen Verbindungsgliedes 4, nämlich des Gummiringes, zu verhindern, ist das Gleitlager 12 mit der Ringfläche 11 der Nabe 9 verklebt, so daß eine Isolierung erreicht wird mit der Folge, daß die sich im Gleitlager 12 bildende Wärme gezwungen ist, auf den metallischen treibenden Teil 2 überzugehen und von diesem abgeleitet werden kann.

## Patentansprüche

1. Drehmoment übertragende Kupplung, zwischen deren treibenden und getriebenen Teil (1,3) sich mindestens ein elastisches Verbindungsglied befindet, dessen eine axiale Außenseite (5) an einer mit dem treibenden Teil (1) verbundenen Außenscheibe (6) befestigt ist und dessen andere axiale Außenseite (7) an einer Innenscheibe (8) anliegt, welche mit einer Nabe (9) verbunden ist, welche an den getriebenen Teil (3) angeschlossen ist, wobei der treibende Teil (1) und die Nabe (9) des getriebenen Teils (3) einander zugeordnete, parallele Ringflächen (10,11) aufweisen, zwischen denen sich ein Gleitlager (12) befindet, dadurch gekennzeichnet, daß die einander zugeordneten, parallelen Ringflächen (10,11) des treibenden Teils (1) und der Nabe (9) des getriebenen Teils (3) unter einem Winkel zur Längsachse der Abtriebswelle verlaufen und das elastische Verbindungsglied (4) unter Vorspannung eingebaut ist, oder die Vorspannung durch in gleicher Weise wirkende Federn (14), vorzugsweise Tellerfedern, aufgebracht ist.

2. Kupplung nach Anspruch 1, dadurch gekennzeichnet, daß der Winkel etwa 45 Grad beträgt.

3. Drehmoment übertragende Kupplung, zwischen deren treibenden und getriebenen Teil (1,3) sich mindestens ein elastisches Verbindungsglied befindet, dessen eine axiale Außenseite (5) an einer mit dem treibenden Teil (1) verbundenen Außenscheibe (6) befestigt ist und dessen andere axiale Außenseite (7) an einer Innenscheibe (8) anliegt, welche mit einer Nabe (9) verbunden ist, welche an den getriebenen Teil (3) angeschlossen ist, wobei der treibende Teil (1) und die Nabe (9) des getriebenen Teils (3) einander zugeordnete, parallele Ringflächen (10,11) aufweisen, zwischen denen sich ein Gleitlager (12) befindet, insbesondere nach Anspruch 1 oder einem der folgenden, dadurch gekennzeichnet, daß zwischen der radialen Außenseite (15) des elastischen Verbindungsgliedes (4) und der dieser zugewandten Innenseite (16) des treibenden Teils (1) ein Ringraum vorhanden ist, welcher mit einem hydraulischen Mittel (17) gefüllt und nach außen hin abgedichtet ist.

4. Kupplung nach Anspruch 3, dadurch gekennzeichnet, daß als hydraulisches Mittel (17) ein technisches Fett Verwendung findet.

5. Kupplung nach Anspruch 1 oder 3, dadurch gekennzeichnet, daß das Gleitlager (12) mit der konischen Ringfläche (11) der Nabe (9) fest verbunden ist, vorzugsweise durch Klebung.

## Claims

1. Torque-transmitting coupling, between the driving and driven portions (1, 3) of which there is at least one resilient connecting element of which one axial surface (5) is fixed to an outer disc (6) connected to the driving portion (1) and the other axial surface (7) abuts an inner disc (8) connected to a hub (9) which is attached to the driven portion (3), the driving portion (1) and the hub (9) of the driven portion (3) comprising parallel, annular surfaces (10, 11) which are associated with one another and between which a sliding bearing (12) is disposed, characterised in that the associated, parallel, annular surfaces (10, 11) of the driving portion (1) and of the hub (9) of the driven portion (3) extend at an angle to the longitudinal axis of the drive shaft and the resilient connecting element (4) is mounted under prestressing, or prestressing is applied by springs (14), preferably plate springs, acting in the same manner.

2. Coupling according to Claim 1, characterised in that the angle is about 45 degrees.

3. Torque-transmitting coupling, between the driving and driven portions (1, 3) of which there is at least one resilient connecting element of which one axial surface (5) is fixed to an outer disc (6) connected to the driving portion (1) and the other axial surface (7) abuts an inner disc (8) connected to a hub (9) which is attached to the driven portion (3), the driving portion (1) and the hub (9) of the driven portion (3) comprising parallel, annular surfaces (10, 11) which are associated with one another and between which a sliding bearing (12) is disposed, particularly according to Claim 1 or one of the following claims, characterised in that, between the radial surface (15) of the resilient connecting element (4) and the facing inner surface (16) of the driving portion (1), there is an annular space which is filled with a hydraulic medium (17) and is sealed from the exterior.

4. Coupling according to Claim 3, characterised in that a technical grease is used as the hydraulic medium (17).

5. Coupling according to Claim 1 or Claim 3, characterized in that the sliding bearing (12) is rigidly connected to the conical annular surface (11) of the hub (9), preferably by bonding.

## Revendications

1. Système d'accouplement transmettant un couple, entre la partie motrice et la partie entraînée (1, 3) duquel se trouve au moins un élément de liaison élastique dont une face extérieure axiale (5) est fixée à un disque extérieur (6) lié à la partie motrice (1) et dont l'autre face extérieure axiale (7) est en appui contre un disque intérieur (8) lié à un moyeu (9) qui est raccordé à la partie entraînée (3), la partie motrice (1) et le moyeu (9) de la partie entraînée (3) comportant des surfaces annulaires (10, 11) parallèles associées, entre lesquelles se trouve un palier lisse (12), caractérisé en ce que les surfaces annulaires (10, 11) parallèles associées de la partie motrice (1) et du moyeu (9) de la partie entraînée (3) forment un angle avec l'axe longitudinal de l'arbre mené et que l'élément de liaison (4) élastique est monté avec une précontrainte, ou que la précontrainte est établie par des ressorts (14) à action identique, de préférence des rondelles élastiques.

2. Système d'accouplement selon la revendication 1, caractérisé en ce que l'angle est d'environ 45 degrés.

3. Système d'accouplement transmettant un couple, entre la partie motrice et le partie entraînée (1, 3) duquel se trouve au moins un élément de liaison élastique dont une face extérieure axiale (5) est fixée à un disque extérieur (6) lié à la partie motrice (1) et dont l'autre face extérieure axiale (7) est en appui contre un disque intérieur (8) lié à un moyeu (9) qui est raccordé à la partie entraînée (3), la partie motrice (1) et le moyeu (9) de la partie entraînée (3) comportant des surfaces annulaires (10, 11) parallèles associées, entre lesquelles se trouve un palier lisse (12), notamment selon la revendication 1 ou l'une des revendications suivantes, caractérisé en ce que, entre la face extérieure radiale (15) de l'élément de liaison (4) élastique et la face intérieure (16) de la partie motrice (1) située en vis-à-vis, il existe un espace annulaire qui est rempli avec un fluide hydraulique (17) et est rendu étanche vis-à-vis de l'extérieur.

4. Système d'accouplement selon la revendication 3, caractérisé en ce que l'on utilise une graisse industrielle en tant que fluide hydraulique (17).

5. Système d'accouplement selon la revendication 1 ou 3, caractérisé en ce que le palier lisse (12) est rendu solidaire de la surface annulaire (11) conique du moyeu (9), de préférence par collage.
